# EUROPEAN PATENT APPLICATION

(11) **EP 4 528 325 A1**
(43) Date of publication of application: **26.03.2025**
(21) Application number: 24199071.2
(22) Date of filing: 06.09.2024
(51) Int. Cl.: G01S 13/58, G01S 13/62, G01S 13/87

(54) **RADAR SYSTEM AND METHOD FOR RADAR SYSTEM**

(30) Priority: 18.09.2023 US 202363583368 P
(71) Applicant: Carrier Corporation, Palm Beach Gardens, FL 33418 (US)
(72) Inventor: MAZUR, Mateusz, Sopot (PL); CEGIELSKI, Tomasz, Rumia (PL)
(74) Representative: Dehns

(57) **Abstract**

A system and method for a radar system is disclosed. The method 300 includes determining 302, by a computing device, a first time of receipt, by a first receiver, of a reflected electromagnetic wave associated with the emitted electromagnetic wave. The method further includes determining 304, by the computing device, a second time of receipt, by a second receiver, of the reflected electromagnetic wave associated with the emitted electromagnetic wave. The method further includes determining 306, by the computing device, based on a difference between the first and second times of receipt, a direction of movement of the object relative to any one or a combination of the first and the second receivers.

## Description

### TECHNICAL FIELD

The present invention relates to operation of a radar system, and more particularly, to detecting a direction of movement of objects within a field of view of a radar system.

### BACKGROUND

Generally, in radar systems, such as Doppler radar systems, an emitted electromagnetic (EM) wave may strike an object in a field of view (FOV) of the radar system and be reflected. A receiver of the radar system may receive the reflected EM wave. If the object has a velocity relative to the receiver of the radar system, the reflected EM wave is shifted by the Doppler effect, relative the emitted EM wave. The Doppler effect may be used to determine the relative velocity of the object.

However, in some instances, a radar system may be installed on a ceiling of a region and may be adapted for detecting movement of objects in a field of view that is on the floor of the region. In such cases, while the radar systems may be able to determine presence of moving objects, they may not be able to determine a direction of movement of the objects.

### SUMMARY

A first aspect provides a radar system, comprising: a transmitter configured to emit an electromagnetic wave in a region defining a field of view (FOV) of the radar system; a plurality of receivers configured to detect reflected electromagnetic waves originating responsive to reflection of the emitted electromagnetic wave from an object located within the FOV of the radar system; and a computing device communicably coupled to the plurality of receivers, the computing device configured to: determine a first time of receipt, by a first receiver, of a reflected electromagnetic wave associated with the emitted electromagnetic wave; determine a second time of receipt, by a second receiver, of the reflected electromagnetic wave associated with the emitted electromagnetic wave; and determine, based on a difference between the first and second times of receipt, a direction of movement of the object relative to any one or a combination of the first and the second receivers.

Optionally, the at least first and second receivers are separated by a predefined distance.

Optionally, the computing device is configured to determine that the object has a motion vector component along an axis between the first and second receivers, from the first receiver towards the second receiver responsive to the first time of receipt occurring before the second time of receipt.

Optionally, the computing device is configured to determine that the object has a motion vector component along the axis between the first and second receivers, from the second receiver towards the first receiver responsive to the second time of receipt occurring before the first time of receipt.

Optionally, the computing device is configured to determine that the object has a motion vector defined orthogonal to the axis between the first and second receivers responsive to the first and second times of receipt occurring simultaneously.

Optionally, the plurality of receivers is arranged in a two-dimensional array and each of the plurality of receivers is separated from an adjacent receiver by a predefined distance.

Optionally, the plurality of receivers comprises first, second, and third receivers. The first and second receivers are arranged adjacent to each other along a first axis. The third receiver is arranged adjacent to any one of the first and second receivers along a second axis.

Optionally, the computing device is further configured to determine a third time of receipt, by the third receiver. The computing device is further configured to determine, based on a difference between the first, second, and third times of receipt, a direction of movement of the object relative to any one or a combination of the first, second, and the third receivers.

A second aspect provides a method for a radar system, comprising: determining, by a computing device, a first time of receipt, by a first receiver, of a reflected electromagnetic wave associated with the emitted electromagnetic wave; determining, by the computing device, a second time of receipt, by a second receiver, of the reflected electromagnetic wave associated with the emitted electromagnetic wave; and determining, by the computing device, based on a difference between the first and second times of receipt, a direction of movement of the object relative to any one or a combination of the first and the second receivers.

Optionally, the at least first and second receivers are separated by a predefined distance.

Optionally, the method further includes determining, by the computing device, that the object has a motion vector component along an axis between the first and second receivers, from the first receiver towards the second receiver responsive to the first time of receipt occurring before the second time of receipt.

Optionally, the method further includes determining, by the computing device, that the object has a motion vector component along the axis between the first and second receivers, from the second receiver towards the first receiver responsive to the second time of receipt occurring before the first time of receipt.

Optionally, the method includes determining, by the computing device, that the object has a motion vector defined orthogonal to the axis between the first and second receivers responsive to the first and second times of receipt occurring simultaneously.

Optionally, the plurality of receivers is arranged in a two-dimensional array and each of the plurality of receivers is separated from an adjacent receiver by a predefined distance.

Optionally, the plurality of receivers includes first, second, and third receivers. The first and second receivers are arranged adjacent to each other along a first axis. The third receiver is arranged adjacent to any one of the first and second receivers along a second axis.

Optionally, the method includes determining, by the computing device, a third time of receipt, by the third receiver. The method further includes determining, by the computing device, based on a difference between the first, second, and third times of receipt, a direction of movement of the object relative to any one or a combination of the first, second, and the third receivers.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the present invention and are incorporated in and constitute a part of this specification. The drawings illustrate exemplary embodiments of the present invention and, together with the description, serve to explain the principles of the present invention, as defined by the appended claims.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A is a schematic representation of a radar system;
FIG. 1B is a schematic block diagram representing the radar system of FIG. 1A;
FIG. 1C is a schematic block diagram representing another radar system of FIG. 1A;
FIG. 2 is a detailed schematic block diagram of a computing device of the radar system of any of FIGs. 1A to 1C;
FIG. 3 is a schematic flow diagram for a method for the radar system of any of FIGs. 1A to 1C; and
FIG. 4 is an exemplary schematic block diagram of a hardware system used for implementing the computing device of FIG. 2.

### DETAILED DESCRIPTION

A detailed description of one or more embodiments of the present invention are presented herein by way of exemplification and not limitation with reference to the Figures.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading, the components of the present invention described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components.

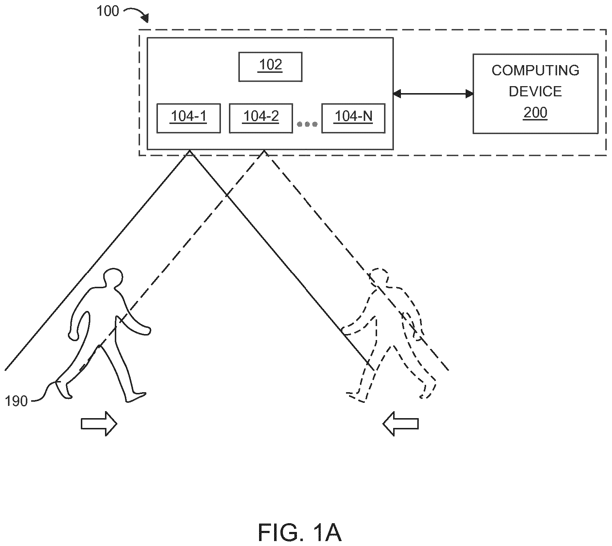

Referring to FIG. 1A, a schematic representation of a radar system 100 is shown. The radar system 100 includes a transmitter 102 and a plurality of receivers 104-1, 104-2... 104-N. The plurality of receivers 104-1, 104-2... 104-N may be individually referred to as "the receiver 104" and may be collectively referred to as "the receivers 104". The transmitter 102 is configured to emit an electromagnetic (EM) wave in a region defining a field of view (FOV) of the radar system 100. The receivers 104 are configured to detect a reflected EM wave. The reflected EM wave may originate responsive to the emitted EM wave reflecting off of an object 190 located within the FOV. The receiver 104 may further be configured to generate a signal responsive to receiving a reflected EM wave.

In one or more embodiments, the radar system 100 may be a Doppler radar system. Generally, an emitted EM wave may strike an object in a field of view of the radar system and be reflected. A receiver of the radar system may receive the reflected EM wave. If the obj ect has a velocity relative to the receiver, the reflected EM wave is shifted by the Doppler effect, relative the emitted EM wave. The Doppler effect may be used to determine the relative velocity of the object.

However, in some instances, a radar system may be installed on a ceiling of a region and may be adapted for detecting movement of objects in a field of view that is on the floor of the region. In such cases, while the radar systems may be able to determine presence of moving objects, they may not be able to determine a direction of movement of the objects.

Thus, there is a requirement for a means to determine, using the radar system, a direction of movement of an object in the field of view of the radar unit. Further, preferably, the means may be cost effective, and be capable of being integrated into existing radar systems without a requirement for significant modifications of the existing radar systems.

The radar system 100 further includes a computing device 200 communicably coupled to the plurality of receivers 104. The computing device 200 may be configured for operating the radar system 100. The computing device 200 may be implemented by way of a single device or a combination of multiple devices that may be communicably coupled or networked together. The computing device 200 may be implemented in hardware or a suitable combination of hardware and software. The computing device 200 may be a hardware device including a processor executing machine-readable program instructions. The "hardware" may include a combination of discrete components, an integrated circuit, an application-specific integrated circuit, a field programmable gate array, a digital signal processor, or other suitable hardware. The "software" may include one or more objects, agents, threads, lines of code, subroutines, separate software applications, two or more lines of code or other suitable software structures operating in one or more software applications or on one or more processors. The processor may include, for example, without limitations, microprocessors, microcomputers, microcontrollers, digital signal processors, central processing units, state machines, logic circuits, any devices that manipulate data or signals based on operational instructions, and the like. Among other capabilities, the processor may fetch and execute computer-readable instructions in the memory operationally coupled with the computing device 200 for performing tasks such as data processing, input/output processing, feature extraction, and/or any other functions.

The radar system 100 may further include units, such as, without limitations, a display unit, an audio unit, a notification unit, an input unit, an output unit, and the like; however, the same are not shown in the FIG. 1A, for the purpose of clarity.

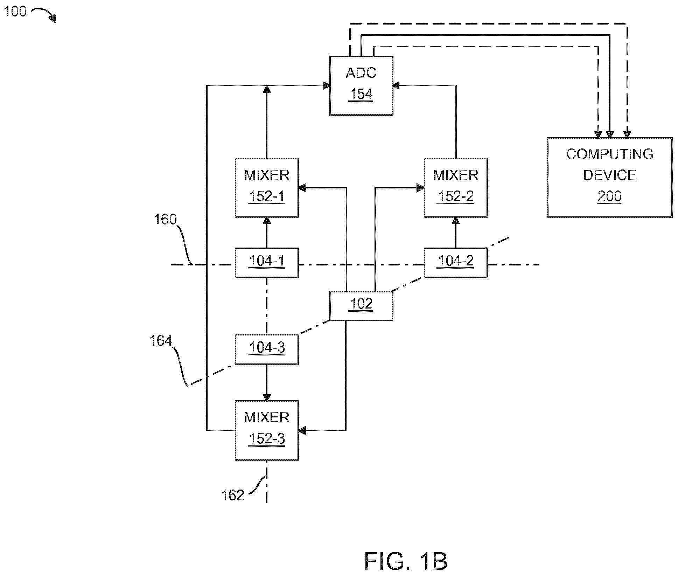

Referring now to FIG. 1B, a schematic block diagram representation of the radar system 100 is shown. Referring to FIGs. 1A and 1B, in one or more embodiments, the plurality of receivers may include first, second and third 104-1, 104-2, 104-3. In the illustrated embodiment, the first and second receivers 104-1, 104-2 are arranged adjacent each other along an axis 160, and are separated by a predefined distance. Further, the third receiver 104-3 is arranged adjacent to any one of the first and second receivers 104-1, 104-2. In the illustrated embodiment of FIG. 1B, the third receiver 104-3 is arranged adjacent to the first receiver 104-1 and is arranged along axes 162 and 164.

The radar system 100 may further include a plurality of mixers (e.g., mixers 152-1, 152-2, 152-3) corresponding to the plurality of receivers 104. Each of the mixers 152 may be configured to receive a signal from the transmitter 102 responsive to emission of the emitted EM wave, and a signal from the corresponding receiver 104 responsive to receipt of the reflected EM wave. Each of the mixers 152 is configured to mix the received signals with transmitted signal and transmit the IF output signals to an analogue to digital converter (ADC) 154. The ADC 154 may be communicably coupled to the computing device 200. In one or more embodiments, the ADC 154 may be communicably coupled to the computing device 200 via one or more channels, where each channel may correspond to a receiver 104.

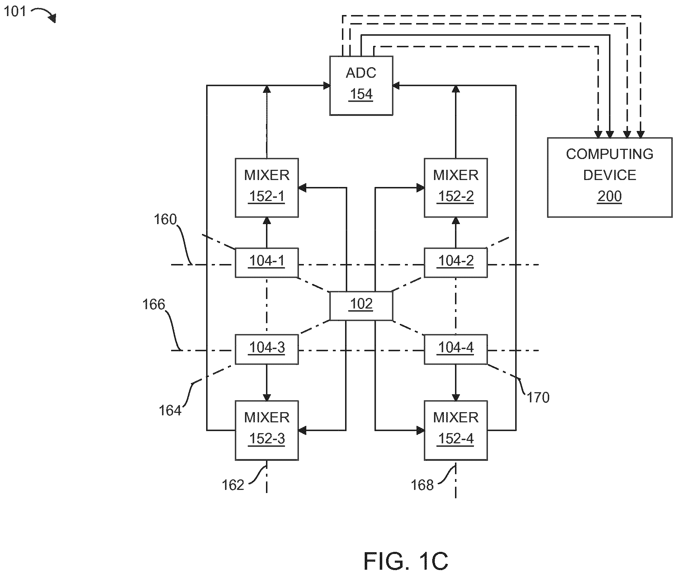

Referring now to FIG. 1C, a schematic block diagram representation of another radar system 101 is shown. The radar system 101 is substantially similar to the radar system 100 of FIG. 1B. common components between the radar system 100 and the radar system 101 are referenced using the same reference numerals. However, in the radar system 101, the plurality of receivers includes first, second, third, and fourth receivers 104-1, 104-2, 104-3, 104-4. In the illustrated embodiment, the first and second receivers 104-1, 104-2 are arranged adjacent each other along an axis 160, and are separated by a predefined distance. Further, the third and fourth receivers 104-3, 104-4 are arranged adjacent to any one of the first and second receivers 104-1, 104-2 along an axis 166. In the illustrated embodiment of FIG. 1C, the third and fourth receivers 104-3, 104-4 are arranged adjacent to the first and second receivers 104-1, 104-2, respectively, and are arranged along the axis 166. Further, the third and fourth receivers 104-3, 104-4 are arranged along axes 164 and 170, respectively.

In one or more embodiments, the plurality of receivers 104 may be arranged in a two-dimensional array, and each of the plurality of receivers 104 may be separated from an adjacent receiver 104 by a predefined distance. In the illustrated embodiment, the first, second, third and fourth receivers 104-1, 104-2, 104-3, 104-4 together are arranged in the form of a two-dimensional array.

The radar system 101 may further include a plurality of mixers (e.g., mixers 152-1, 152-2, 152-3, 152-4) corresponding to the plurality of receivers 104. Each of the mixers may be configured to receive a signal from the transmitter 102 responsive to emission of the emitted EM wave, and a signal from the corresponding receiver 104 responsive to receipt of the reflected EM wave. Each of the mixers 152 is configured to mix the received signals with transmitted signal and transmit the IF output signals to an analogue to digital converter (ADC) 154. The ADC 154 may be communicably coupled to the computing device 200. In one or more embodiments, the ADC 154 may be communicably coupled to the computing device 200 via one or more channels, where each channel may correspond to a receiver 104.

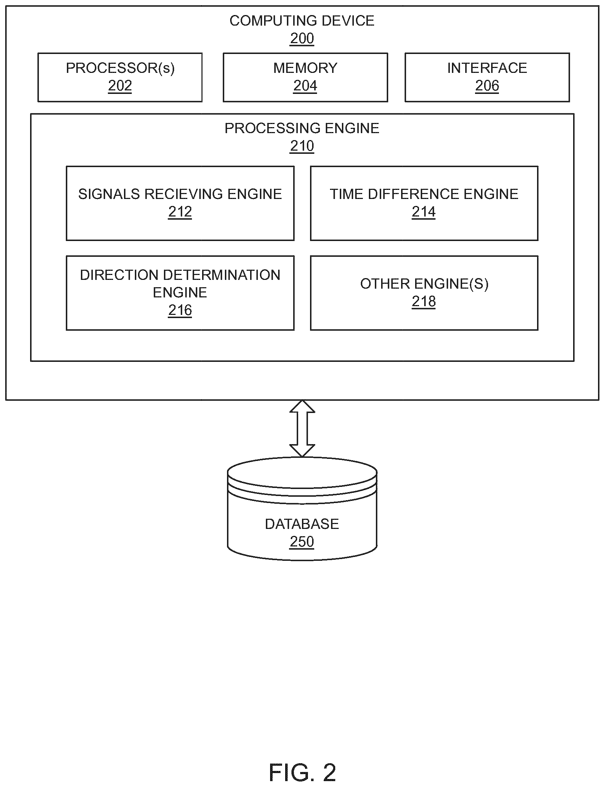

Referring to FIG. 2, a detailed schematic block diagram of the computing device 200 is shown. The computing device 200 includes a processor 202, and a memory 204 communicably coupled to the processor 202. The memory 204 may store instructions executable by the processor 202 to implement the computing device 200. The computing device 200 further includes an interface 206. The interface 206 may include a variety of interfaces, for example, interfaces for data input and output devices, referred to as I/O devices, storage devices, and the like. The interface 206 may also provide a communication pathway for one or more components of the computing device 200. The computing device 200 is communicably coupled to a database 250. The database 250 may be configured to store data generated during execution of instructions by the processor 202 in order to implement the computing device 200. The database 250 may further be configured to store additional data required for implementing the computing device 200.

Referring now to FIGs. 1A to 2, the computing device 200 includes a processing engine 210. The processing engine 210 may be implemented as a combination of hardware and programming (for example, programmable instructions) to implement one or more functionalities of the processing engine 210. In some examples, the processing engine 210 may be implemented by electronic circuitry.

The processing engine 210 may include a signal receiving engine 212, a time difference engine 214, a direction determination engine 216, and other engine(s) 218. The other engine(s) 218 may include engines configured to perform one or more functions ancillary functions associated with the processing engine 210.

The signals receiving engine 212 may be configured to determine a first time of receipt, by a first receiver 104-1 of a reflected EM wave associated with an emitted EM wave from the transmitter 102 of the radar system 100. Specifically, the signals receiving engine 212 may be configured to receive a signal from the first receiver 104-1 indicative of receipt, by the first receiver 104-1 of a reflected EM wave associated with the emitted EM wave. The signals receiving engine 212 may be further configured to extract, from the received signal, a first time of receipt of the EM wave by the first receiver 104-1.

The signals receiving engine 212 may be further configured to determine a second time of receipt, by a second receiver 104-2 of the reflected EM wave associated with the emitted EM wave from the transmitter 102. Specifically, the signals receiving engine 212 may be configured to receive a signal from the second receiver 104-2 indicative of receipt, by the second receiver 104-2 of a reflected EM wave associated with the emitted EM wave. The signals receiving engine 212 may be further configured to extract, from the received signal, a second time of receipt of the EM wave by the second receiver 104-2.

The reflected EM wave received by the first and/or the second receiver 104-1, 104-2 may originate due to reflection of the same emitted EM wave by the object 190 moving in a direction relative to any one or a combination of the first and second receivers 104-1, 104-2. The signals receiving engine 212 may be configured to determine that the reflected EM waves received by the first and second receivers 104-1, 104-2 may be associated with the same emitted EM wave based on a time of emission of the EM wave by the transmitter 102.

The time difference engine 214 may be configured to determine, based on the first and second times of receipt, a time difference between the first and second times of receipt. In some cases, the first and second times of receipt may be substantially the same, in which case, the time difference may be zero. Such a scenario may occur when the object 190 is moving along a direction that may be constantly equidistant to the first and second receivers 104-1, 104-2.

In some other cases, the first time receipt may have occurred before the second time receipt. Such a scenario may occur when the object 190 is moving along a direction from a region proximal to the first receiver 104-1 towards a region proximal to the second receiver 104-2.

In some other cases still, the second time receipt may have occurred before the first time receipt. Such a scenario may occur when the object 190 is moving along a direction from a region proximal to the second receiver 104-2 towards a region proximal to the first receiver 104-1.

The direction determination engine 216 may be configured to determine, based on the difference between the first and second times of receipt, a direction of movement of the object 190 relative to any one or a combination of the first and second receivers 104-1, 104-2.

In one or more embodiments, the direction determination engine 216 may be configured to determine that the object 190 has a motion vector orthogonal to the first axis 160 between the first and second receivers 104-1, 104-2, responsive to the first and second times of receipt occurring simultaneously.

In one or more embodiments, the direction determination engine 216 may be configured to determine that the object 190 has a motion vector component along the first axis 160 between the first and second receivers 104-1, 104-2, from the first receiver 104-1 towards the second receive 104-2 responsive to the first time of receipt occurring before the second time of receipt.

In one or more embodiments, the direction determination engine 216 may be configured to determine that the object 190 has a motion vector component along the first axis 160 between the first and second receivers 104-1, 104-2, from the second receiver 104-2 towards the first receive 104-1 responsive to the second time of receipt occurring before the first time of receipt.

In embodiments, where the radar system 100 further includes the third receiver 104-3 disposed along the axes 162, 164 (refer FIG. 1B), the signals receiving engine 212 may be further configured to determine a third time of receipt, by the third receiver 104-3 of the reflected EM wave associated with the emitted EM wave from the transmitter 102. Specifically, the signals receiving engine 212 may be configured to receive a signal from the third receiver 104-3 indicative of receipt, by the third receiver 104-3 of a reflected EM wave associated with the emitted EM wave. The signals receiving engine 212 may be further configured to extract, from the received signal, a third time of receipt of the EM wave by the third receiver 104-3. The signals receiving engine 212 may be configured to determine that the reflected EM waves received by the third receiver 104-3 may be associated with the same emitted EM wave based on a time of emission of the EM wave by the transmitter 102.

The time difference engine 214 may be configured to determine, based on the first, second and third times of receipt, a time difference between the first, second and third times of receipt.

The direction determination engine 216 may be configured to determine, based on the difference between the first, second, and third times of receipt, a direction of movement of the object 190 relative to any one or a combination of the first, second, and third receivers 104-1, 104-2, 104-3.

In embodiments, where the radar system 100 may further include the fourth receiver 104-4 adjusted to receivers 104-1, 104-2, 104-3 respectively along the axes 160 to 170(refer FIG. 1C), the signals receiving engine 212 may be further configured to determine a fourth time of receipt, by the fourth receiver 104-4 of the reflected EM wave associated with the emitted EM wave from the transmitter 102. Specifically, the signals receiving engine 212 may be configured to receive a signal from the fourth receiver 104-4 indicative of receipt, by the fourth receiver 104-4 of a reflected EM wave associated with the emitted EM wave. The signals receiving engine 212 may be further configured to extract, from the received signal, a fourth time of receipt of the EM wave by the fourth receiver 104-4. The signals receiving engine 212 may be configured to determine that the reflected EM waves received by the fourth receiver 104-4 may be associated with the same emitted EM wave based on a time of emission of the EM wave by the transmitter 102.

The time difference engine 214 may be configured to determine, based on the first, second, third, and fourth times of receipt, a time difference between the first, second, third, and fourth times of receipt.

The direction determination engine 216 may be configured to determine, based on the difference between the first, second, third, and fourth times of receipt, a direction of movement of the object 190 relative to any one or a combination of the first, second, third , and fourth receivers 104-1, 104-2, 104-3, 104-4.

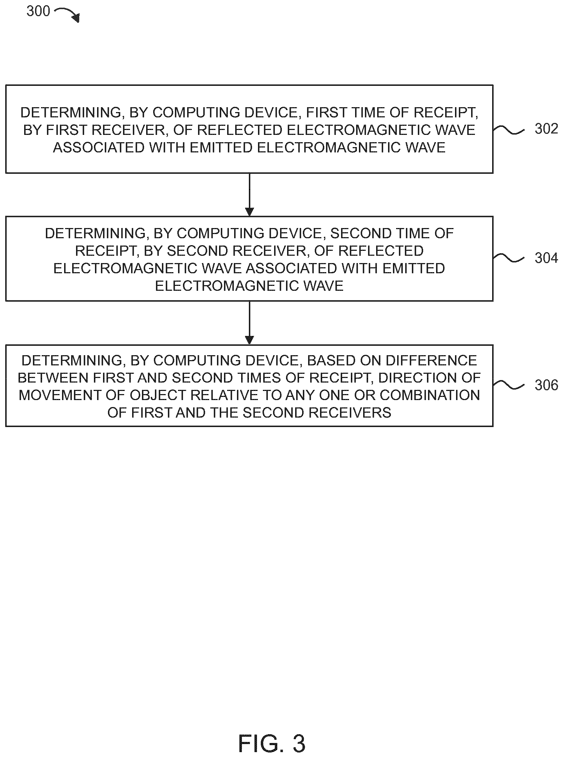

Referring to FIG. 3, a schematic flow diagram for a method 300 for the radar system 100 is shown. Referring now to FIGs. 1A to 3, at step 302, the method 300 includes determining, by the computing device 200, the first time of receipt, by the first receiver 104-1, of the reflected EM wave associated with the emitted EM wave. At step 304, the method 300 further includes determining, by the computing device 200, the second time of receipt, by the second receiver 104-2, of the reflected EM wave associated with the emitted EM wave. At step 306, the method 300 further includes determining, by the computing device 200, based on the difference between the first and second times of receipt, the direction of movement of the object 190 relative to any one or a combination of the first and the second receivers 104-1, 104-2.

In one or more embodiments, the method 300 further includes determining, by the computing device 200, that the object 190 has a motion vector component along an axis between the first and second receivers 104-1, 104-2, from the first receiver 104-1 towards the second receiver 104-2 responsive to the first time of receipt occurring before the second time of receipt.

In one or more embodiments, the method 300 further includes determining, by the computing device 200, that the object 190 has a motion vector component along the axis between the first and second receivers 104-1, 104-2, from the second receiver 104-2 towards the first receiver 104-1 responsive to the second time of receipt occurring before the first time of receipt.

In one or more embodiments, the method 300 includes determining, by the computing device 200, that the object 190 has a motion vector defined orthogonal to the axis between the first and second receivers 104-1, 104-2 responsive to the first and second times of receipt occurring simultaneously.

In one or more embodiments, the method 300 includes determining, by the computing device 200, a third time of receipt, by the third receiver 104-3. The method 300 further includes determining, by the computing device 200, based on a difference between the first, second, and third times of receipt, a direction of movement of the object 190 relative to any one or a combination of the first, second, and the third receivers 104-1, 104-2, 104-3.

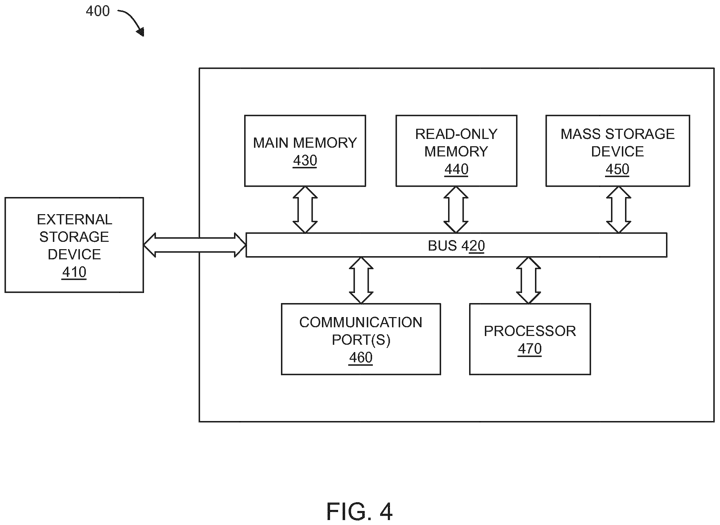

FIG. 4 is an exemplary schematic block diagram of a computer system 400 used for implementing the computing device 200. The computer system 400 can include a database 410, a bus 420, a main memory 430, a read only memory 440, a mass storage device 450, communication port 460, and a processor 470. A person skilled in the art will appreciate that the computer system may include more than one processor and communication ports. Examples of processor 470 include, but are not limited to, an Intel^{®} Itanium^{®} or Itanium 2 processor(s), or AMD^{®} Opteron^{®} or Athlon MP^{®} processor(s), Motorola^{®} lines of processors, FortiSOC^{™} system on chip processors or other future processors. Processor 470 may include various modules. Communication port 460 can be any of an RS-232 port for use with a modem-based dialup connection, a 10/100 Ethernet port, a Gigabit or 10 Gigabit port using copper or fibre, a serial port, a parallel port, or other existing or future ports. Communication port 460 may be chosen depending on a network, such a Local Area Network (LAN), Wide Area Network (WAN), or any network to which computer system connects. Memory 430 can be Random Access Memory (RAM), or any other dynamic storage device commonly known in the art. Read-only memory 440 can be any static storage device(s) e.g., but not limited to, a Programmable Read Only Memory (PROM) chips for storing static information e.g., start-up or BIOS instructions for processor 470. Mass storage 450 may be any current or future mass storage solution, which can be used to store information and/or instructions. Exemplary mass storage solutions include, but are not limited to, Parallel Advanced Technology Attachment (PATA) or Serial Advanced Technology Attachment (SATA) hard disk drives or solid-state drives (internal or external, e.g., having Universal Serial Bus (USB) and/or Firewire interfaces), e.g. those available from Seagate (e.g., the Seagate Barracuda 7102 family) or Hitachi (e.g., the Hitachi Deskstar 7K1000), one or more optical discs, Redundant Array of Independent Disks (RAID) storage, e.g. an array of disks (e.g., SATA arrays), available from various vendors including Dot Hill Systems Corp., LaCie, Nexsan Technologies, Inc. and Enhance Technology, Inc.

Bus 420 communicatively couples processor(s) 470 with the other memory, storage, and communication blocks. Bus 420 can be, e.g., a Peripheral Component Interconnect (PCI) / PCI Extended (PCI-X) bus, Small Computer System Interface (SCSI), USB or the like, for connecting expansion cards, drives and other subsystems as well as other buses, such a front side bus (FSB), which connects processor 470 to software system.

Optionally, operator and administrative interfaces, e.g., a display, keyboard, and a cursor control device, may also be coupled to bus 420 to support direct operator interaction with a computer system. Other operator and administrative interfaces can be provided through network connections connected through communication port 460. The database 410 can be any kind of external hard-drives, floppy drives, IOMEGA^{®} Zip Drives, Compact Disc - Read Only Memory (CD-ROM), Compact Disc-Re-Writable (CD-RW), Digital Video Disk-Read Only Memory (DVD-ROM). Components described above are meant only to exemplify various possibilities.

While the invention has been described with reference to exemplary embodiments, it will be understood by those skilled in the art that various changes may be made and equivalents may be substituted for elements thereof without departing from the scope of the invention as defined by the appended claims. Modifications may be made to adopt a particular situation or material to the teachings of the invention without departing from the scope of the invention as defined by the appended claims. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A radar system, comprising:
a transmitter configured to emit an electromagnetic wave in a region defining a field of view (FOV) of the radar system;
a plurality of receivers configured to detect reflected electromagnetic waves originating responsive to reflection of the emitted electromagnetic wave from an object located within the FOV of the radar system; and
a computing device communicably coupled to the plurality of receivers, the computing device configured to:
determine a first time of receipt, by a first receiver, of a reflected electromagnetic wave associated with the emitted electromagnetic wave;
determine a second time of receipt, by a second receiver, of the reflected electromagnetic wave associated with the emitted electromagnetic wave; and
determine, based on a difference between the first and second times of receipt, a direction of movement of the object relative to any one or a combination of the first and the second receivers.

2. The radar system of claim 1, wherein the at least first and second receivers are separated by a predefined distance.

3. The radar system of any preceding claim, wherein the computing device is configured to determine that the object has a motion vector component along an axis between the first and second receivers, from the first receiver towards the second receiver responsive to the first time of receipt occurring before the second time of receipt.

4. The radar system of any preceding claim, wherein the computing device is configured to determine that the object has a motion vector component along the axis between the first and second receivers, from the second receiver towards the first receiver responsive to the second time of receipt occurring before the first time of receipt.

5. The radar system of any preceding claim, wherein the computing device is configured to determine that the object has a motion vector defined orthogonal to the axis between the first and second receivers responsive to the first and second times of receipt occurring simultaneously.

6. The radar system of any preceding claim, wherein the plurality of receivers is arranged in a two-dimensional array and each of the plurality of receivers is separated from an adjacent receiver by a predefined distance.

7. The radar system of any preceding claim, wherein the plurality of receivers comprises first, second, and third receivers, wherein the first and second receivers are arranged adjacent to each other along a first axis, wherein the third receiver is arranged adjacent to any one of the first and second receivers along a second axis.

8. The radar system of claim 7, wherein the computing device is further configured to: determine a third time of receipt, by the third receiver; and
determine, based on a difference between the first, second, and third times of receipt, a direction of movement of the object relative to any one or a combination of the first, second, and the third receivers.

9. A method for a radar system, comprising:
determining, by a computing device, a first time of receipt, by a first receiver, of a reflected electromagnetic wave associated with the emitted electromagnetic wave;
determining, by the computing device, a second time of receipt, by a second receiver, of the reflected electromagnetic wave associated with the emitted electromagnetic wave; and
determining, by the computing device, based on a difference between the first and second times of receipt, a direction of movement of the object relative to any one or a combination of the first and the second receivers.

10. The method of claim 9, wherein the at least first and second receivers are separated by a predefined distance.

11. The method of any of claims 9 to 10, comprising:
determining, by the computing device, that the obj ect has a motion vector component along an axis between the first and second receivers, from the first receiver towards the second receiver responsive to the first time of receipt occurring before the second time of receipt.

12. The method of any of claims 9 to 11, comprising:
determining, by the computing device, that the obj ect has a motion vector component along the axis between the first and second receivers, from the second receiver towards the first receiver responsive to the second time of receipt occurring before the first time of receipt.

13. The method of any of claims 9 to 12, comprising:
determining, by the computing device, that the object has a motion vector defined orthogonal to the axis between the first and second receivers responsive to the first and second times of receipt occurring simultaneously.

14. The method of any of claims 9 to 13, wherein the plurality of receivers is arranged in a two-dimensional array and each of the plurality of receivers is separated from an adjacent receiver by a predefined distance.

15. The method of any of claims 9 to 14, wherein the plurality of receivers comprises first, second, and third receivers, wherein the first and second receivers are arranged adjacent to each other along a first axis, wherein the third receiver is arranged adjacent to any one of the first and second receivers along a second axis;
optionally wherein the method comprises:
determining, by the computing device, a third time of receipt, by the third receiver; and
determining, by the computing device, based on a difference between the first, second, and third times of receipt, a direction of movement of the object relative to any one or a combination of the first, second, and the third receivers.
